(19) Europäisches Patentamt
European Patent Office
Office européen des brevets

(11) **EP 0 626 785 B1**

(12) **EUROPEAN PATENT SPECIFICATION**

(45) Date of publication and mention
of the grant of the patent:
**26.01.2005 Bulletin 2005/04**

(51) Int Cl.⁷: **H04N 3/15**

(21) Application number: **94303899.2**

(22) Date of filing: **31.05.1994**

(54) **Reading means for solid state image sensor**

Leseverfahren für Festkörper-Bildsensor

Dispositif de lecture pour capteur d'images à l'état solide

(84) Designated Contracting States:
**DE FR GB IT NL**

(30) Priority: **28.05.1993 JP 12708093**
**28.05.1993 JP 12708793**
**06.08.1993 JP 21354793**

(43) Date of publication of application:
**30.11.1994 Bulletin 1994/48**

(73) Proprietor: **CANON KABUSHIKI KAISHA**
**Tokyo (JP)**

(72) Inventors:
• **Miyawaki, Mamoru, c/o Canon Kabushiki Kaisha**
**Tokyo (JP)**
• **Ueno, Isamu, c/o Canon Kabushiki Kaisha**
**Tokyo (JP)**

(74) Representative:
**Beresford, Keith Denis Lewis et al**
**BERESFORD & Co.**
**16 High Holborn**
**London WC1V 6BX (GB)**

(56) References cited:
**EP-A- 0 349 027**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to an image sensor of a copying apparatus, a facsimile apparatus, a video camera recorder, or the like and to an image sensor for an automatic focusing of a camera. Preferably, the invention relates to an image sensor having an image signal process such as pattern recognition, detection of a moving image, or the like.

Related Background Art

As a sensor to recognize an image (video image) as an object, there is a report by Kazuo Kyuma, "Optical neural net and intelligent sensor", the lecture papers of the fourth image input technique symposium, pages 71 to 78, November 10, 1992.
The above known technique, however, has the following technical drawbacks.

(1) Since an optical current is read out, it can be read out in only one direction and a pattern recognizing precision is low.
(2) Even in case of (64 x 64) pixels, it takes a time of 200 μsec for a (outline) process.
(3) Since a Schottky diode is formed by a comb-shaped Aℓ metal film, a numerical aperture of a photosensitive device is small and a sensitivity is low.
(4) Since a current is read out, a layout pattern of read-out wirings is complicated.
(5) Noises cannot be removed and it is difficult to perform an image process at a high precision.

EP-A-0349027 proposes a radiation transducing device intended for use in circumstances in which it is intended to detect radiation only at one or a few locations in the picture area, for example in recording collisions of elementary particles in experiments at high energy storage rings or detecting flashes of lightning. In an array of pixel elements, each element provides an output both in a row direction and in a column direction. The device as a whole provides both analog and digital outputs in both row and column directions. The analog output is provided by connecting signals to a plurality of source followers connected in parallel with each other and in series with a load. When radiation is incident on more than one row or column of pixels, the voltage over the load is determined by the largest amount of radiation incident on a pixel. The digital outputs provide a signal indicating whether the amount of radiation received exceeds a pre-set threshold value and signals specifying the row and column number of the pixel which received the radiation.

Summary of the Invention

According to the present invention there is provided a two-dimensional array of signal generating elements, as set out in claim 1. Optional features are set out in the remaining claims.
An embodiment of the invention provides an image sensor which can execute a signal process for performing a noise rejection or the like at a high speed. In the embodiment, an image sensor has read-out means in which a plurality of photoelectric conversion elements are two-dimensionally arranged and output signals from elements in the row direction and output signals from elements in the column direction can be read out in parallel.
According to the embodiment of the invention, since a signal of each of the photoelectric conversion elements is output as a voltage of a floating bus line, the reading operations in the row and column directions can be executed in parallel, and the simultaneous or sequential or batch reading operation can be executed and/or the reading operation can be also performed in the case where a photoelectric conversion portion is divided between several lines. A reference voltage can be set for the floating bus line, so that a noise-cancelled signal can be also detected.
The above and other objects and features of the present invention will become apparent from the following detailed description and the appended claims with reference to the accompanying drawings.

BRIEF DESCRIPTION OF THE DRAWINGS

Fig. 1 is a circuit constructional diagram of an image sensor according to an embodiment 1 of the present invention;

Fig. 2 is a timing chart for explaining the operation of the image sensor according to the embodiment 1;

Figs. 3A to 3C are a plan view and cross sectional views of a sensor unit cell according to the embodiment 1;

Fig. 4 is a circuit constructional diagram of an image sensor according to an embodiment 2 of the invention;

Fig. 5 is a timing chart for explaining the operation of the image sensor according to the embodiment 2;

Fig. 6 is a circuit constructional diagram of an image sensor according to an embodiment 3 of the invention;

Fig. 7 is a circuit constructional diagram of an image sensor according to an embodiment 4 of the invention;

Fig. 8 is a circuit constructional diagram of an image sensor according to an embodiment 5 of the invention;

Fig. 9 is comprised of Figs. 9A and 9B showing diagrams of an embodiment of an image processing section of the invention;

Fig. 10 is comprised of Figs. 10A and 10B showing diagrams of another embodiment of an image processing section of the invention;

Fig. 11 is comprised of Figs. 11A and 11B showing diagrams of still another embodiment of an image processing section of the invention;

Fig. 12 is comprised of Figs. 12A and 12B showing diagrams of further another embodiment of an image processing section of the invention; and

Fig. 13 is a diagram showing further another embodiment of an image processing section of the invention.


## DETAILED DESCRIPTION OF THE PREFERRED EMBODIMENTS

According to embodiments which will be explained hereinbelow, the simultaneous or sequential reading operation is time-sequentially executed to a plurality of common read-out lines represented by rows and columns.

As elements which are used in the invention, it is desirable to use non-destructive type sensors for reading out signals to a plurality of coupling capacitors on the output side.

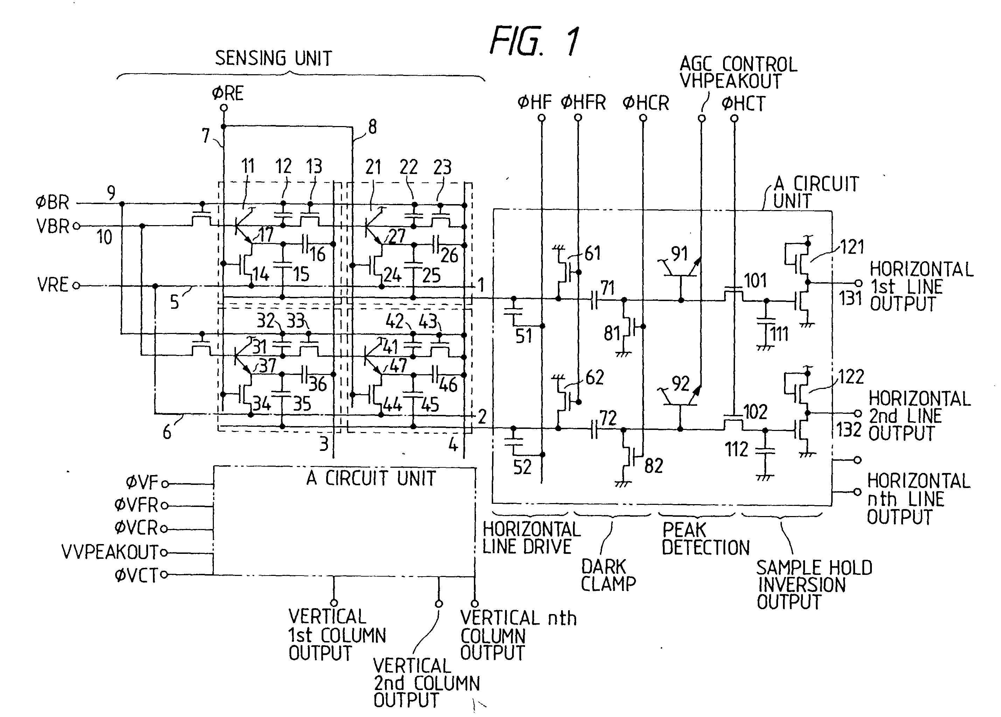

Fig. 1 shows an equivalent circuit diagram of the first embodiment of a photosensitive unit and a read-out circuit of a photoelectric converting apparatus of the invention. Although a construction of (2 x 2) pixels has been shown in the diagram, it will be obviously understood that the number of pixels is not limited to such a value.

Reference numerals 11, 21, 31, and 41 denote npn-type bipolar transistors. A base region of each of the bipolar transistors is used as a photodiode of a photosensitive layer. Holes of electron/hole pairs generated by the light irradiation are accumulated into the base region.

Reference numerals 12, 22, 32, and 42 denote capacitors provided on the base regions. These capacitors control the ON/OFF states of the bipolar transistors.

Reference numerals 13, 23, 33, and 43 denote P-type MOS switches which are used to separate the photoelectric converting cells in the lateral direction and to reset the potentials of photodiodes.

Reference numerals 14, 24, 34, and 44 denote N-type MOS switches to reset emitter potentials. Sources of the MOS switches 14 and 24 are connected to an emitter reset power source line 5. Sources of the MOS switches 34 and 44 are similarly connected to an emitter reset power source line 6.

Gates of the MOS switches 14 and 34 are connected to an emitter reset driving line 7. Gates of MOS switches 24 and 44 are similarly connected to an emitter reset driving line 8. A pulse $\phi_{RE}$ can be applied to the emitter reset driving lines 7 and 8.

Reference numerals 15, 16, 25, 26, 35, 36, 45, and 46 denote capacitors which are connected from emitters 17, 27, 37, and 47 of the above bipolar transistors to floating bus lines 1, 2, 3, and 4, respectively.

The capacitor and PMOS gate provided for the base region of the bipolar transistor which have been described above are connected to a driving line 9 and a pulse $\phi_{BR}$ can be applied to them. In the embodiment, they are commonly connected in all of the pixels. Alternatively, in the case that each pixel is read out and reset on the unit basis of a pixel or pixel block, the pulses $\phi_{BR}$ and $\phi_{RE}$ should be separated so as to be applied on the unit basis of a pixel or block.

A base reset power source $V_{BR}$ of each bipolar transistor can be applied to bases of all pixels through a P-type diffusion layer 10.

A read-out circuit section will now be described. Only the read-out circuit in the horizontal direction is shown in Fig. 1. Since read-out signals are output simultaneously in the horizontal and vertical directions every row and every column in parallel, a circuit form in the horizontal direction and a circuit form in the vertical direction are similar. Therefore, the circuit in the vertical direction is omitted here.

Reference numerals 51 and 52 denote capacitors for controlling potentials of the horizontal floating bus lines 1 and 2, respectively. A pulse $\phi_{HF}$ for control can be applied to one side of the capacitors 51 and 52.

Reference numerals 61 and 62 denote MOS switches for resetting the potentials of the horizontal floating bus lines 1 and 2. A pulse $\phi_{HFR}$ is applied to gates of the above MOS switches.

Reference numerals 71 and 72 denote series capacitors for clamping the potentials of the horizontal floating bus lines; 81 and 82 indicate switches for resetting which are controlled by a pulse $\phi_{HCR}$; and 91 and 92 npn-type bipolar transistors in which bases are connected to output lines from the serial capacitors 71 and 72 and emitters are commonly connected. A peak signal of the pixels on each horizontal lines is output to a terminal $V_{HPEAKOUT}$.

Reference numerals 101 and 102 denote transfer switches to sample signals and hold them on capacitors 111 and 112. These transfer switches can be driven by a pulse $\phi_{HCT}$.

Reference numerals 121 and 122 denote MOS inverting amplifiers and their outputs 131 and 132 are generated therefrom.

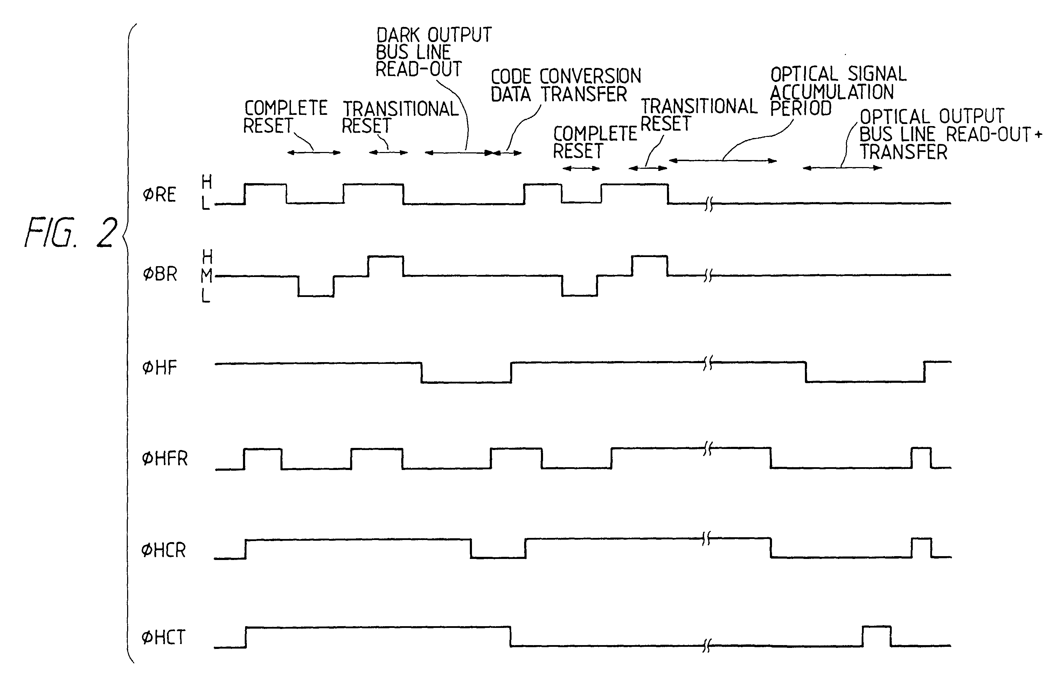

A driving method will now be described with reference to a timing chart of Fig. 2.

First, a pulse $\phi_{RE}$ is set to the high level and the N-type MOS switches 14, 24, 34, and 44 provided for the emitter portions of the pixel cells are turned on. Thus, the emitter potential is fixed to a power source $V_{RE}$.

At the same time, the potentials of the horizonal floating bus lines 1 and 2 are reset to the ground potential by setting the pulse $\phi_{HFR}$ to the high level, and the potential of the read-out circuit is also reset to the ground potential by setting the pulses $\phi_{HCR}$ and $\phi_{HCT}$ to the high level.

In order to reset the base potential of the bipolar transistor in the pixel section, a potential $V_{BR}$ of about 1 to 2 V is applied to the base of the bipolar transistor. However, if the emitter is connected to the ground in this state, the bipolar transistors of all pixels are turned on and a large current flows. Therefore, the pulse $\phi_{RE}$ and $\phi_{HFR}$ are returned to the low level, thereby setting the horizontal floating bus lines 1 and 2 and the emitters into a floating state. After that, the pulse $\phi_{BR}$ is set to the low level from the intermediate level and the P-type MOS switches 13, 23, 33, and 43 of the pixel section are set to ON and the base potential is fixed to the potential $V_{BR}$. In Fig. 1, such a resetting method (complete reset) is executed from one side through the P-type diffusion layer 10. In order to reduce the resetting time, however, it is possible to execute the resetting from both sides of the pixel.

After completion of the resetting, the pulse $\phi_{BR}$ is returned to the intermediate level, the pulse $\phi_{RE}$ and $\phi_{HFR}$ are again set to the high level, the emitters are set again to $V_{RE}$, and the horizontal floating bus lines are reset to the ground potential. In order to converge the base region to the base potential that is decided by the emitter potential, the pulse $\phi_{BR}$ is again set to the high level. Due to this, the base potential is raised by the capacitors 12, 22, 32, and 42 provided in the pixel sections. A base-emitter bias allows the bipolar transistors of all pixels to operate in the forward direction. For this purpose, by setting the fixed base potential $V_{BR}$ at the time of complete resetting to a desired value, the above operation can be easily accomplished. Such a resetting method is called a transitional reset and, at the start of the reset, although the current flows by the forward bias of the bipolar transistor, the electrons which were reversely implanted from the emitter are recombined with the holes in the base and the base potential suddenly drops. In association with it, a reset current exponentially decreases. By the above reset, a variation in reset potential or the like is reduced and the base potential becomes uniform, so that reset noises upon reading decrease.

Subsequently, in order to set the emitters of the pixel portion into a floating state, the pulse $\phi_{RE}$ is set to the low level, the pulse $\phi_{BR}$ is set to the intermediate level, the pulse $\phi_{HFR}$ is also set to the low level, and the horizontal floating bus lines 1 and 2 are set to the floating state.

Before optical signals are accumulated, a dark output is read out in order to clamp the signal by an output level at the time of the dark state. For this purpose, the pulse $\phi_{HF}$ which has been held at the high level for a period of time so far is set to the low level. Due to this, the horizontal floating bus lines 1 and 2 are swung toward low levels through the capacitors 51 and 52. Further, the emitters 17, 27, 37, and 47 of the bipolar transistors are swung toward low levels through the capacitors 15, 25, 35, and 45. By the above operation, the bipolar transistor is again turned on and the voltage corresponding to the base potential in the dark state is read out to the emitter side. To clarify the voltage relation at this time, the whole capacitance of the horizontal floating bus line 1 is set to $C_{HFL1}$, the capacitance of the capacitor 15 is set to $C_{15}$, the capacitance of the capacitor 25 is set to $C_{25}$, an increased amount of the emitter potential due to the turn-on of the bipolar transistor in the dark state is set to $V_{dark}^{11}$ for the bipolar transistor 11 and is set to $V_{dark}^{21}$, and the capacitance of the capacitor 51 is set to $C_{51}$. In this instance, the voltage of the floating bus line due to the output in the dark state is set to

$$\frac{C_{15}V_{dark}^{11}}{C_{HFL1}} + \frac{C_{25}V_{dark}^{21}}{C_{HFL1}} - \frac{C_{51}}{C_{HFL1}}\phi_{HF} \tag{1}$$

With respect to the horizontal floating bus line 2 as well, the voltage due to the output in the dark state is set to

$$\frac{C_{35}V_{dark}^{31}}{C_{HFL2}} + \frac{C_{45}V_{dark}^{41}}{C_{HFL2}} - \frac{C_{52}}{C_{HFL2}}\phi_{HF} \tag{2}$$

$C_{35}$ and $C_{45}$ denote capacitances of the capacitors 35 and 45; $C_{HFL2}$ a capacitance of the horizontal floating bus line 2; $V_{dark}^{31}$ and $V_{dark}^{41}$ output values on the emitter side of the bipolar transistors 31 and 41 in the dark state; and $C_{52}$ a capacitance of the capacitor 52. In case of the embodiment of the invention, all of $C_{15}$, $C_{25}$, $C_{35}$, and $C_{45}$

are set to the same value, $C_{HFL1}$ and $C_{HFL2}$ are set to the same value, and $C_{51}$ and $C_{52}$ are set to the same value.

Now, assuming that

$$C_{HE} \equiv C_{15} = C_{25} = C_{35} = C_{45}$$

$$C_{HC} \equiv C_{51} = C_{52},$$

the following equation is obtained:

$$C_{HFL} \equiv C_{HFL1} = C_{HFL2}$$

The expressions (1) and (2) are respectively simplified as follows.

$$\frac{C_{HE}}{C_{HFL}} (V_{dark}^{11} + V_{dark}^{21}) - \frac{C_{HC}}{C_{HFL}} \phi_{HF} \qquad (1')$$

$$\frac{C_{HE}}{C_{HFL}} (V_{dark}^{31} + V_{dark}^{41}) - \frac{C_{HC}}{C_{HFL}} \phi_{HF} \qquad (2')$$

When the output at the dark-state level is read out, the output lines on the right side of the series capacitors 71 and 72 are fixed to the ground potential by the MOS switches 81 and 82. However, after the reading operation was sufficiently settled and the voltage change was eliminated, the pulse $\phi_{HCR}$ is set to the low level and the lines on the right side of the series capacitors 71 and 72 are respectively set to the floating state. After that, the pulse $\phi_{HFR}$ is set to the high level and the horizontal floating bus lines 1 and 2 are reset to the ground potential. In this instance, since the voltages are reduced by the values shown by the above expressions (1)' and (2)', the voltages on the right side of the series capacitors 71 and 72 are set to the following values.

$$-\frac{K}{C_{HFL}}\left[C_{HE} \ (V_{dark}^{11} + V_{dark}^{21}) \ - \ C_{HC} \ \phi_{HF}\right] \qquad \cdots \ (3)$$

$$-\frac{K}{C_{HFL}}\left[C_{HE} \ (V_{dark}^{31} + V_{dark}^{41}) \ - \ C_{HC} \ \phi_{HF}\right] \qquad \cdots \ (4)$$

where, K is a constant which is determined from the capacitances of the series capacitors, sample hold capacitors, and the like.

The pulse $\phi_{HCT}$ is subsequently set to the low level and the voltages of the above expressions (3) and (4) are held on $C_{111}$ and $C_{112}$ of the sample hold capacitors 111 and 112. After the pulse $\phi_{HCT}$ was set to the low level, the pulse $\phi_{HF}$ is set to the high level.

Before the optical signals are accumulated, the potentials of the emitters and bases of the bipolar transistors and the potentials of the output lines on the right side of the series capacitors 71 and 72 are reset by the operations similar to those in case of reading out the outputs in the dark state.

After the above resetting operations were finished, the optical signal accumulating operation is started. Since the pulse $\phi_{BR}$ is set to the intermediate level from the high level, the base potentials of the bipolar transistors are swung to values on the negative side. Due to this, since the bipolar transistors are perfectly held in the OFF state for the accumulation period of time, no voltage change occurs in both of the emitters in the floating state and the horizonal floating bus lines. Therefore, for the accumulation period of time, the pulses $\phi_{RE}$ and $\phi_{HFR}$ may be set to the high level or the low level and it is possible to set the emitters and the horizontal floating bus lines to either one of the state in which they are fixed to the ground voltage or the state in which they are not fixed to the ground voltage. At the timings shown in Fig. 2, the emitters are set into the floating state and the horizontal floating bus lines are fixed to the ground potential.

After completion of the optical signal accumulation period of time, the pulses $\phi_{HFR}$ and $\phi_{HCR}$ are set to the low level to set the horizontal floating bus lines and the output lines on the right side of the series capacitors into the floating state, respectively.

After that, the pulse $\phi_{HF}$ is set to the low level. Due to this, the voltages of the horizontal floating lines and the emitters are reduced. The base-emitter junctions in the bipolar transistors are forward biassed and the optical signal is read out at each emitter. The voltages at the emitters are set to optical signal components $V_p{}^{11}$, $V_p{}^{21}$, $V_p{}^{31}$, and $V_p{}^{41}$ which were irradiated to the photodiodes formed in the base regions of the bipolar transistors and to the bias components $V_{dark}{}^{11}$, $V_{dark}{}^{21}$, $V_{dark}{}^{31}$, and $V_{dark}{}^{41}$ of the outputs in the dark state. Therefore, the potentials of the horizontal floating lines are as shown by the following expressions (5) and (6).

$$\frac{1}{C_{HFL}}\left[ C_{HE} \ (V_p^{11}+V_{dark}^{11} \ + \ V_p^{21}+V_{dark}^{21}) \ - \ C_{HC} \ \phi_{HF}\right] \qquad \cdots (5)$$

$$\frac{1}{C_{HFL}}\left[ C_{HE} \ (V_p^{31}+V_{dark}^{31} \ + \ V_p^{41}+V_{dark}^{41}) \ - \ C_{HC} \ \phi_{HF}\right] \qquad \cdots (6)$$

When the pulse $\phi_{HCT}$ is subsequently set to the high level, voltage changes having the amounts of the expressions (5) and (6) are read out to the sampling capacitors, so that they are added to the voltages of the above expressions (3) and (4) and the voltages as shown by the following expressions (7) and (8) are consequently derived.

$$\frac{K}{C_{HFL}}\left[ C_{HE} \ (V_p^{11}+V_{dark}^{11} \ + \ V_p^{21}+V_{dark}^{21}) \ - \ C_{HC} \ \phi_{HF}\right]$$

$$- \ \frac{K}{C_{HFL}}\left[ C_{HE} \ (V_{dark}^{11} \ + \ V_{dark}^{21}) \ - \ C_{HC} \ \phi_{HF}\right] \qquad \cdots (7)$$

$$\frac{K}{C_{HFL}}\left[C_{HE}\ (V_{p}^{31}+V_{dark}^{31}\ +\ V_{p}^{41}+V_{dark}^{41})\ -\ C_{HC}\ \phi_{HF}\right]$$

$$-\ \frac{K}{C_{HFL}}\left[C_{HE}\ (V_{dark}^{31}\ +\ V_{dark}^{41})\ -\ C_{HC}\ \phi_{HF}\right]\ \cdots\ (8)$$

Thus, the horizontal addition outputs are read out in parallel as shown by the following expressions (9) and (10).

$$K\frac{C_{HE}}{C_{HFL}}(V_p^{11} + V_p^{21}) \qquad\qquad (9)$$

$$K\frac{C_{HE}}{C_{HFL}}(V_p^{31} + V_p^{41}) \qquad\qquad (10)$$

Since operations similar to those mentioned above are also executed in the vertical direction, addition outputs are read out in parallel in the vertical direction.

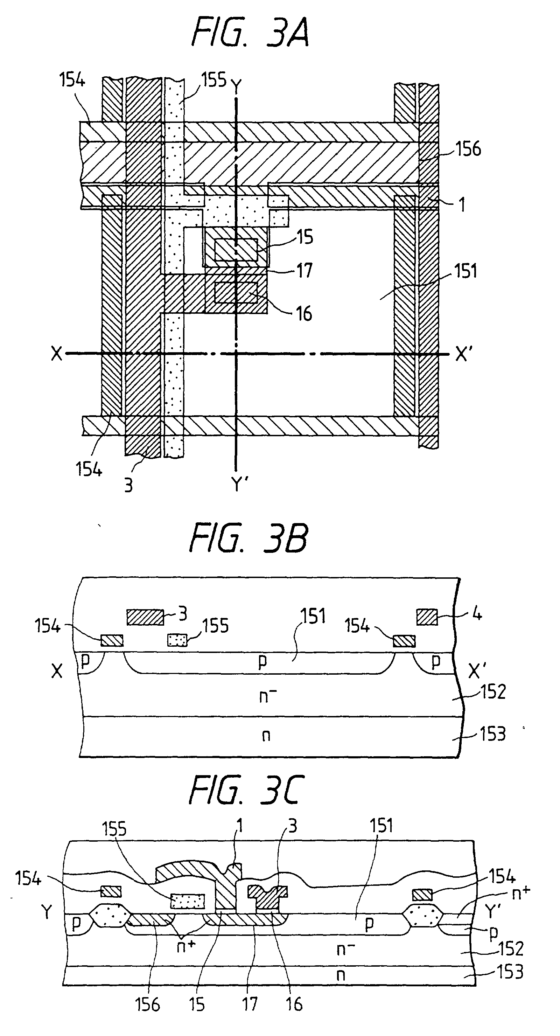

A structure of the sensor section of the embodiment will now be described with reference to Figs. 3A to 3C. Fig. 3A is a plan view of a unit cell of the bipolar transistor 11 section in Fig. 1. Fig. 3B is a cross sectional view taken along the line X-X' in Fig. 3A. Fig. 3C is a cross sectional view taken along the line Y-Y' in Fig. 3A. In the diagrams, the same portions as those in Fig. 1 are designated by the same reference numerals.

Reference numeral 151 denotes a base layer of the bipolar transistor 11; 17 the emitter comprising an $n^+$ diffusion layer; 152 an $n^-$ diffusion layer; and 153 a substrate forming a collector layer of the bipolar transistor.

In addition to the above construction, it will be obviously understood that an $n^-$ layer can be formed on a P-type substrate through an $n^+$ buried layer.

Reference numeral 154 denotes a gate electrode for resetting and driving the base layer and a wiring connected to the gate electrodes. As will be understood from Fig. 3B, the base layer of each cell is separated by the gate electrodes 154. The pulse $\phi_{BR}$ shown in Fig. 1 is applied to those gate electrodes. When the pulse $\phi_{BR}$ is at the low level, the P-type MOS transistor is turned on and the base potential is reset to $V_{BR}$.

When the pulse $\phi_{BR}$ at the high level is applied, a capacitor which is formed by an overlap portion of the gate electrode 154 and the base layer also functions as a capacitor 12 shown in Fig. 1 for raising the base potential.

Reference numeral 155 denotes a second gate electrode and a wiring connected thereto. As will be understood from Fig. 3C, the gate electrode 155 is provided to control the ON/OFF operations of the MOS transistor between the emitter 17 and the power source line $V_{RE}$ comprising the $n^+$ diffusion layer 156.

The horizontal floating bus line 1 and the vertical floating bus line 3 are connected to the emitter 17 through insulating layers as shown at 15 and 16 in Fig. 3C.

As described above, the image sensor of the embodiment can be realized by a simple construction by using two sets of gate wiring materials, one set of diffusion layer, power source line, and two sets of wiring layers (for instance, Aℓ1 and Aℓ2 for the horizontal and vertical floating bus lines). In the embodiment, the capacitors 15, 16, 25, 26, 35, 36, 45, and 46 of the pixel section have been set to the same values. However, it will be obviously understood that by changing those values, the weight of the output of each pixel can be changed.

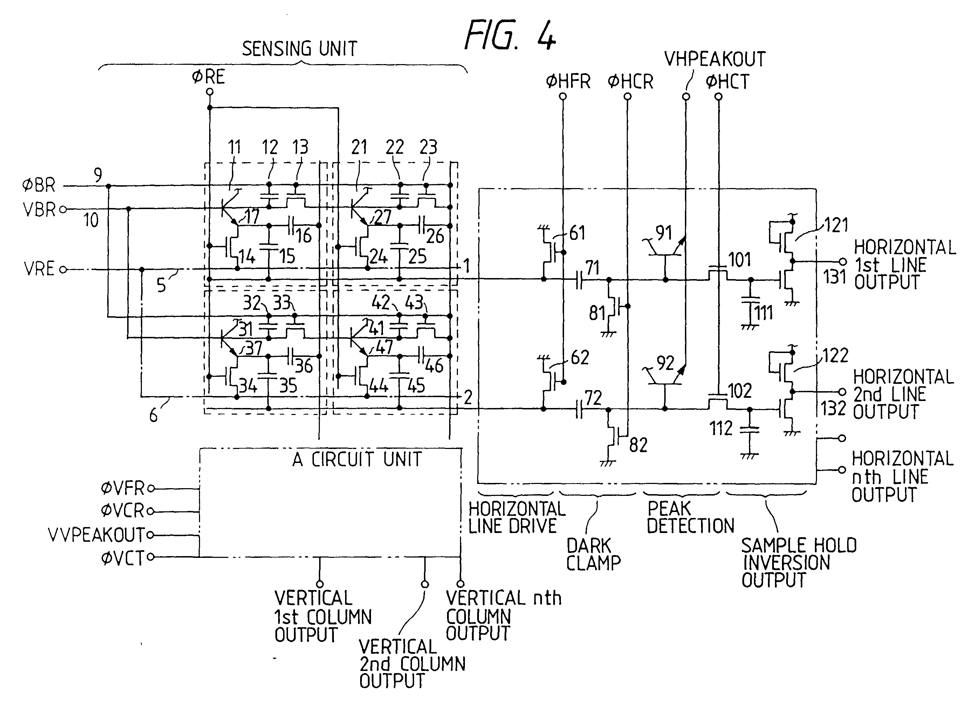

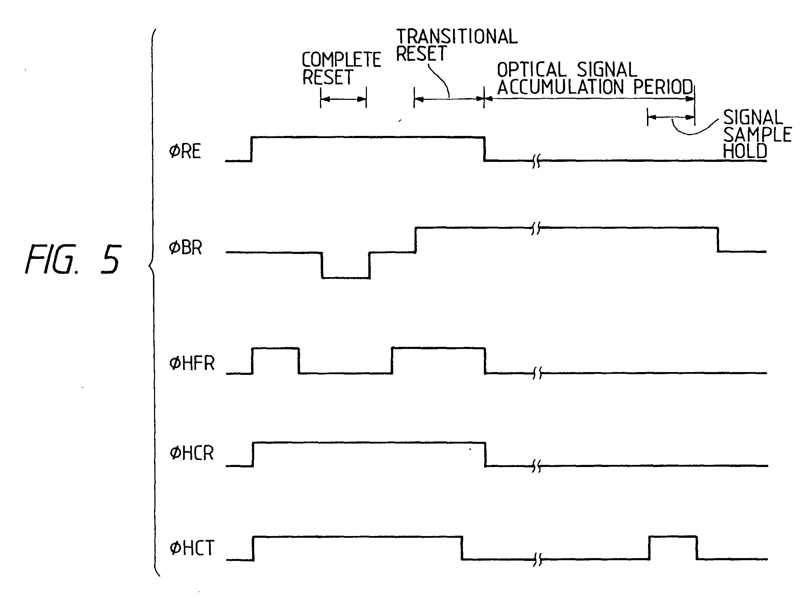

Fig. 4 shows an equivalent circuit diagram of the second embodiment. Fig. 5 shows a driving timing chart. In the second embodiment, the same portions as those in the first embodiment are designated by the same reference numerals and their descriptions are omitted.

The second embodiment differs from the first embodiment with respect to a point that the resetting and reading operations are executed by controlling the base potentials by the capacitors 12, 22, 32, and 42 provided in each cell and that the potentials of the horizontal and vertical floating bus lines are not controlled. Therefore, the capacitors 51 and 52 and the pulse $\phi_{HF}$ shown in Fig. 1 and the capacitors and pulse $\phi_{VF}$ for the vertical line corresponding to them are also unnecessary.

An operating method will now be described with reference to a timing chart shown in Fig. 5. In a manner similar to the first embodiment, the bases, emitters, horizontal floating lines, and output lines on the right side of the series capacitors 71 and 72 are reset. At a time point of the end of the transitional reset, the MOS transistors for resetting the emitters are in the ON state, the horizontal floating bus lines are fixed to the ground potential, and the output lines on the right side of the series capacitors are also fixed to the ground potential. By sufficiently executing the transitional resetting operation, the base potential decreases and a state is obtained in which the current hardly flows in the bipolar transistor. After such a state occurs, at the above terminals, when the pulses $\phi_{RE}$, $\phi_{HFR}$, and $\phi_{HCR}$ are set to the low level, each pixel outputs the signal corresponding to the base potential which rises due to the irradiated light, and the addition of these outputs appears on the horizontal floating lines.

So that the voltage fluctuation which is caused when the pulses $\phi_{RE}$, $\phi_{HFR}$, and $\phi_{HCR}$ are set to the low level is not propagated to the sample and hold capacitors, it is desirable to set the pulse $\phi_{HCT}$ to the low level just before the end of the transitional reset.

As mentioned above, the output corresponding to the addition of the signals of each pixel appears on the horizontal floating bus lines. The potentials of the output lines on the right side of the series capacitors also rise through the series capacitors 71 and 72.

In the operation of the embodiment, an increase in output can be monitored during the optical signal accumulation. Therefore, as shown at 91 and 92, by connecting the base layers of the npn-type bipolar transistors to the output lines and by commonly connecting the emitters, the peak value of the signal which was output in the horizontal direction can be detected. Due to this, by properly selecting the accumulation time, the output levels of the image data when the signal is processed later can be equalized.

It is sufficient that, at a time point of the end of a desired accumulation time, the pulse $\phi_{HCT}$ is turned on and the data is read into the sample and hold capacitors. The data is read out in parallel from the sample and hold capacitors through the amplifier. Because the data has been output through the inverting amplifiers of the MOS transistors in the first and second embodiments, the data such as a character or the like is converted in a manner such that an output level of a character region is inverted to be at a high level and the image process at the later stage becomes easy.

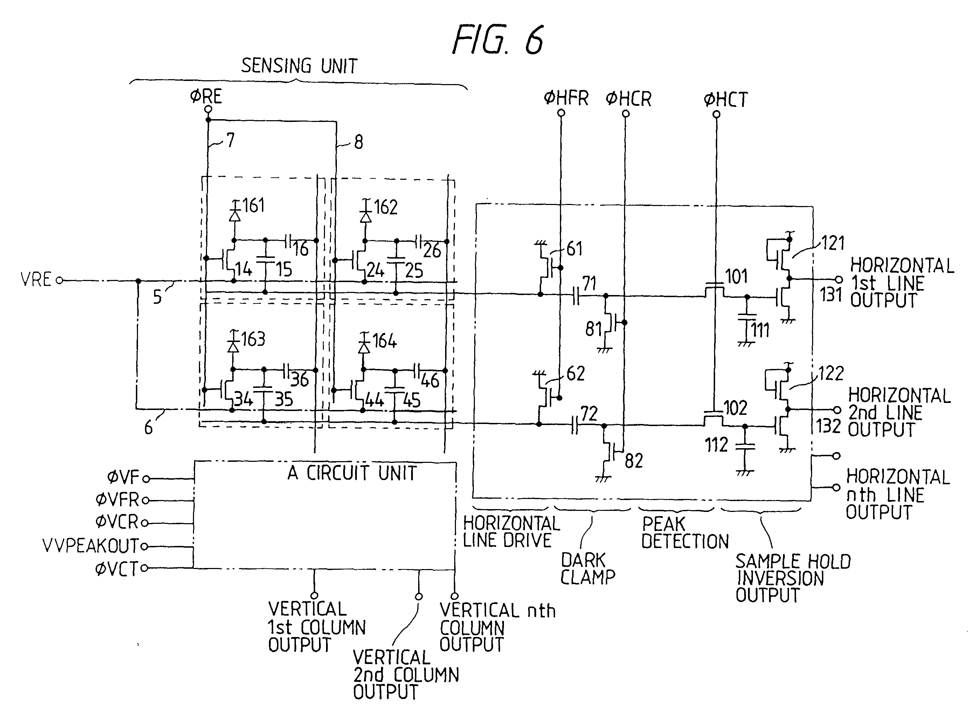

The third embodiment of the invention will now be described with reference to Fig. 6. In Fig. 6, the same portions as those shown in the foregoing embodiment are designated by the same reference numerals and their descriptions are omitted. The third embodiment differs from the foregoing embodiment with respect to a point that the bipolar devices are eliminated and output signals of photodiodes 161, 162, 163, and 164 are directly supplied to the horizontal and vertical floating bus lines through the capacitors 15, 16, 25, 26, 27, and 28.

As will be also understood from Fig. 6, since a construction of the third embodiment is simple, a numerical aperture of a photosensitive unit is large. If parasitic capacitances existing in the horizontal and vertical floating bus lines are suppressed to small values and the capacitances of the capacitors 15, 16, 25, 26, 35, 36, 45, and 46 can be reduced, an output by the light irradiation of the photodiode region is also obtained. Therefore, in case of an image in which a large enough light amount is obtained, the construction of the embodiment 3 is effective.

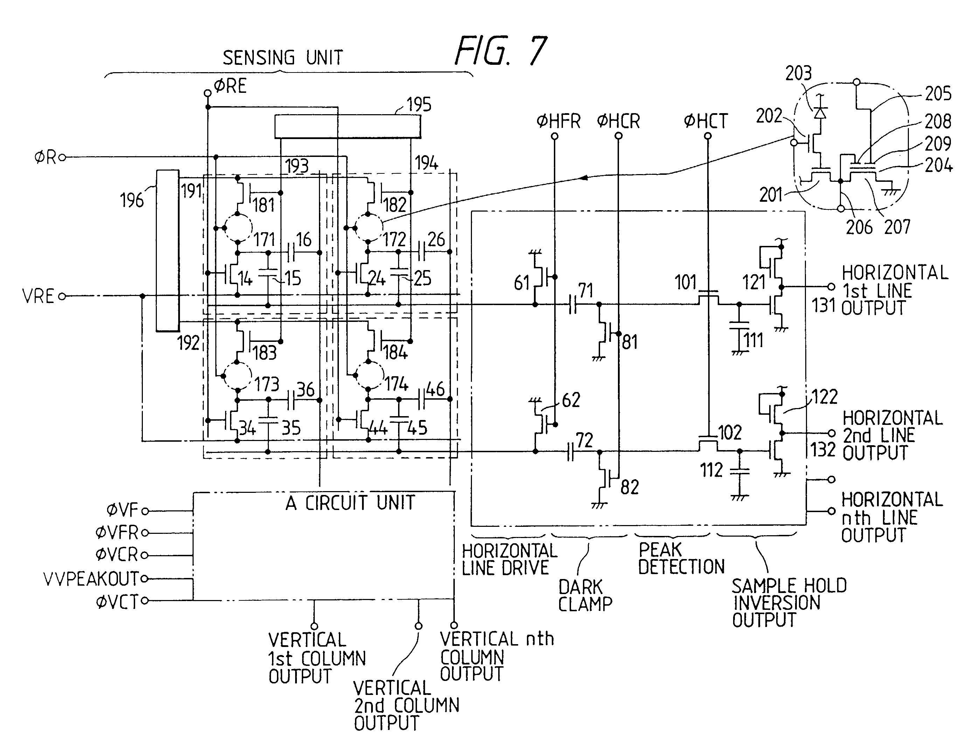

The fourth embodiment of the invention will now be described with reference to Fig. 7. In the fourth embodiment, the sensitivity of the photoelectric converting unit can be varied at every pixel and sum of products arithmetic operations can be executed in a single operation in a photoelectric converting region.

A construction of the photosensitive section will be first described. Reference numeral 203 denotes a photodiode. Carriers which were photoelectrically converted in a photodiode region are transferred to the gate electrode of an MOS transistor 201 through a transfer gate 202.

Not only an ordinary MOSFET but also a JFET or the like can be used as a transistor 201. A current flowing in the transistor unit 201 is modulated by the transferred carriers.

On the other hand, in order to change a gain of an amplifier which is formed by transistors 201 and 207, the gate of the transistor 207 is formed of a sandwich layer providing a floating gate 204 and a second layer of separated gates 208 and 209 over the floating gate 204. The gate 208 is connected to an output terminal 206. The gate 209 is connected to a control terminal 205.

The voltage of the floating gate 204 rises or drops by a pulse which is input to the control terminal 205, so that the effective resistance value of the transistor 207 changes. Due to this, the sensitivity of the output taken out from the output terminal of each cell is controlled.

It is sufficient to input the pulse to each cell as follows. As shown in Fig. 7, a transfer pulse from the photodiode to the gate of the amplifier is realized by a pulse $\phi_R$. Pulses for adjusting the sensitivities of the devices are sent from a power source 196 through lines 191 and 192. It is sufficient to provide switches for selection 181, 182, 183, and 184 and to supply their selection pulses from a pulse generator 195 through wirings 193 and 194.

As described above, the sensitivity can be changed at every cell and each output is added by the horizontal and vertical floating bus lines, so that sum of products arithmetic operations can be executed in a single operation. A real time Fourier transformation or the like of the pixels can be performed.

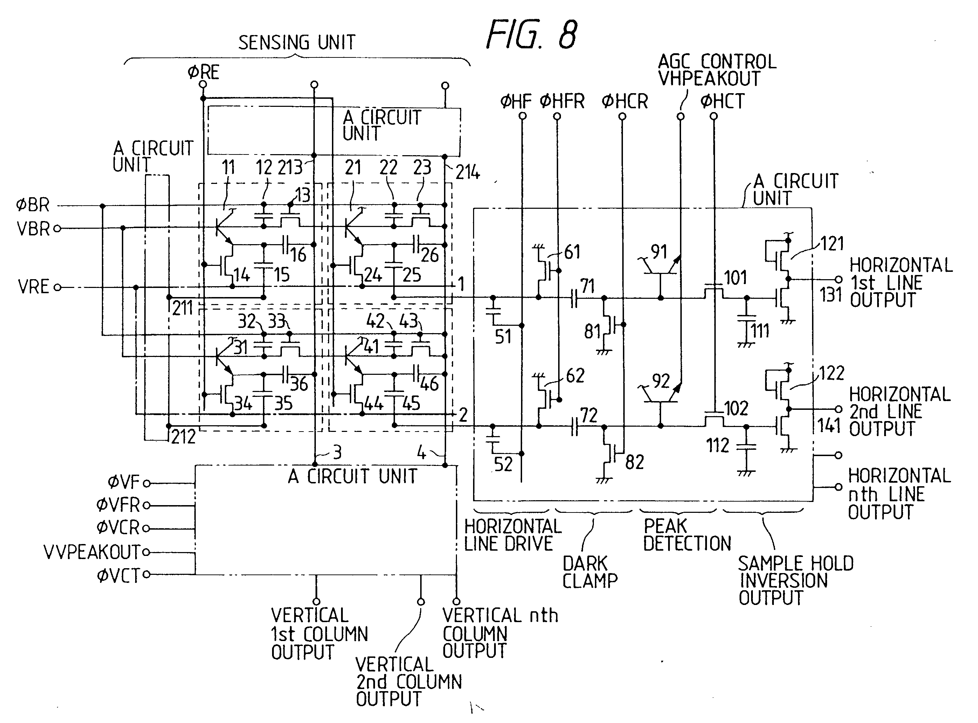

The fifth embodiment of the invention will now be described with reference to Fig. 8. The fifth embodiment relates to an example of a case where each of the horizontal and vertical floating bus lines is divided and signals are separately generated from the right side, left side, upper side, and lower side.

In Fig. 8, the horizontal floating bus lines 1 and 2 extend to the right and horizonal floating bus lines 211 and 212 extend to the left. The vertical floating bus lines 3 and 4 extend to the lower side and vertical floating bus lines 213 and 214 extend to the upper side. Similar read-out circuits are arranged on those floating bus lines, respectively. Although Fig. 8 relates to the example in which four cells were divided, the number of cells is not limited to four and it will be obviously understood that the numbers of upper, lower, left, and right lines are not always equal.

Several embodiments of an image processing unit to process the output signals from the embodiments of the invention mentioned above will now be described.

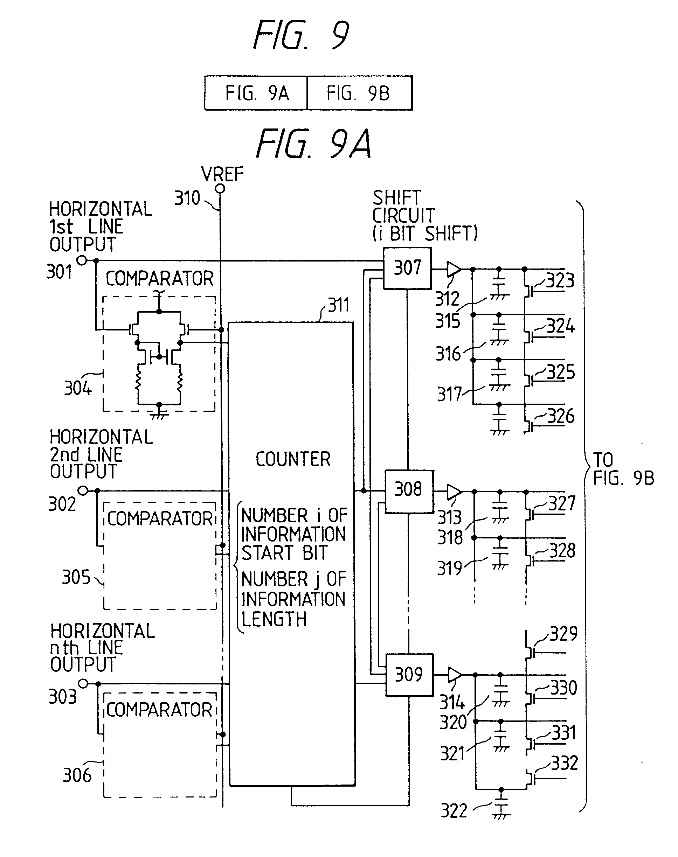

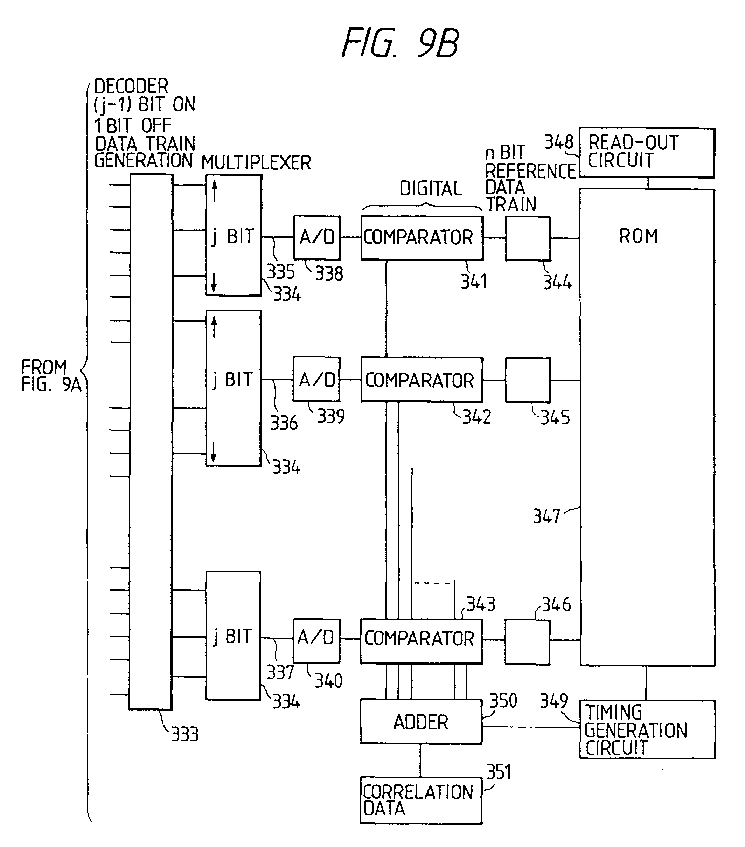

An image processing unit embodying the invention will now be described with reference to Figs. 9A and 9B. Since the horizontal and vertical outputs are read out in the same format, only the horizonal output will now be described.

Reference numerals 301, 302, and 303 denote first, second, and n-th horizontal line outputs. Each of those outputs is branched into two outputs. One of them is supplied to shift circuits 307, 308, and 309 and the other is supplied to comparators 304, 305, and 306.

Each comparator judges whether the output signal is equal to or higher than a reference potential $V_{REF}$ shown at 310 or not in order to detect the region of the image obtained by the photoelectric conversion unit. An output of the comparator is supplied to a counter circuit 311. The number of bits until the image starts and a length of image are calculated by the counter circuit.

It is now assumed that the number of bits until the image data starts is set to (i) and the length of image is set to (j) in the counter circuit. The horizontal line outputs 301, 302, and 303 are simultaneously shifted forward by (i - 1) bits, thereby aligning the heads of the images. It is desirable to use a parallel type in which transmission gates are combined as a shift circuit.

Outputs of the shift circuits are transmitted through amplifiers 312, 313, and 314. The first line data of the head of the image is written into capacitors 315, 316, and 317. The next line data is written into capacitors 318 and 319. The line data of the last line or the line data having no image data is written into capacitors 320, 321, ..., and 322.

The number of those capacitors is set to $n^2$. Those capacitors are arranged so that they can be separated or connected by MOS switches 323 to 332. The number of gates of the MOS switches is set to $(n^2 - 1)$ since the MOS switches are arranged between the $n^2$ capacitors. However, there are generated pulses in decoder 333 such that if the voltage at which the MOS gate is turned on is set to $V_{ON}$ and the voltage at which it is turned off is set to $V_{OFF}$, after (j - 1) signals of $V_{ON}$ continued, one signal of $V_{OFF}$ is generated and, subsequently, after (j - 1) signals of $V_{ON}$ continued, one signal of $V_{OFF}$ is generated. Due to this, the image data is mixed every (j) bits. Therefore, n-bit outputs 335, 336, and 337 are obtained through a multiplexer 334 to select the data at a period of (j) bits.

By executing the processes described above, even an image of an arbitrary size existing at an arbitrary position in the photoelectric converting region can be accurately compared with reference data held in the memory and a pattern recognition precision is raised.

Reference numerals 338, 339, and 340 denote A/D converters; 341, 342, and 343 denote digital comparators; 344, 345, and 346 n-bit reference data trains which were read out from an ROM 347; 348 a data read-out circuit to read out the data from the ROM 347; 349 a timing generation circuit; 350 an adder; and 351 a correlation data processing circuit.

The reference data in the ROM is first read out in the data trains 344, 345, and 346 and differential arithmetic operations between those data trains and the image signal received by the light irradiation are executed in parallel by the digital comparators. The image is recognized when the sum of the absolute values of the differential outputs between the data of the pixels and the reference data is minimum. Therefore, the digital comparators 341, 342, and 343 send the data as code data to the adder 350. The result of addition is stored into the correlation data circuit 351. The read-out circuit 348 is activated by the timing generation circuit 349. A comparison arithmetic operation with the next reference data is executed. Each data is stored into the correlation data processing circuit 351. The data of the largest correlation, namely, the data in which the addition result is minimum is selected from the results of a plurality of arithmetic operations by the correlation data circuit and the result is generated.

As described above, the (n) line data are accurately converted into the lengths of reference data stored in the ROM and the comparing arithmetic operations can be executed in parallel, so that a pattern recognition of a high speed and a high precision can be realized.

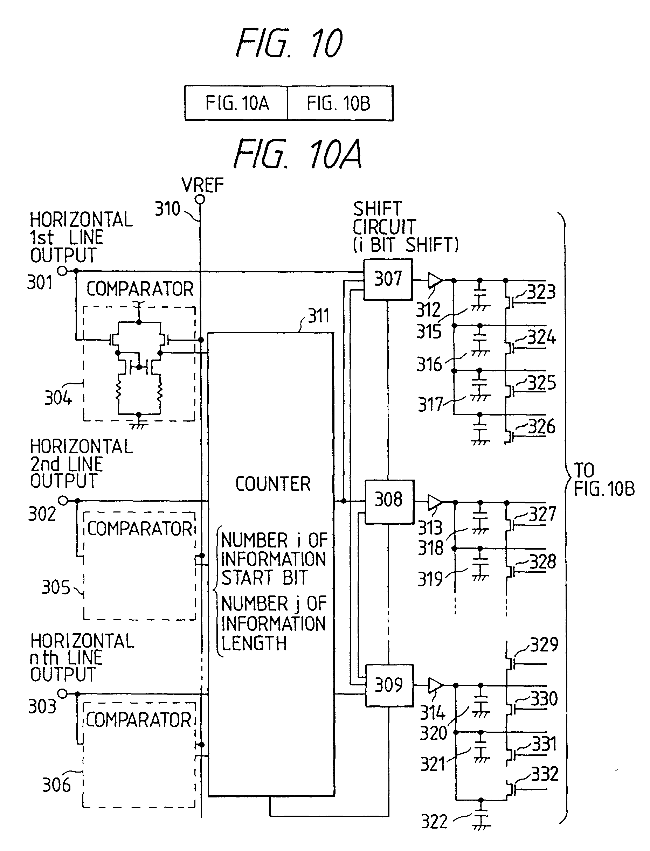

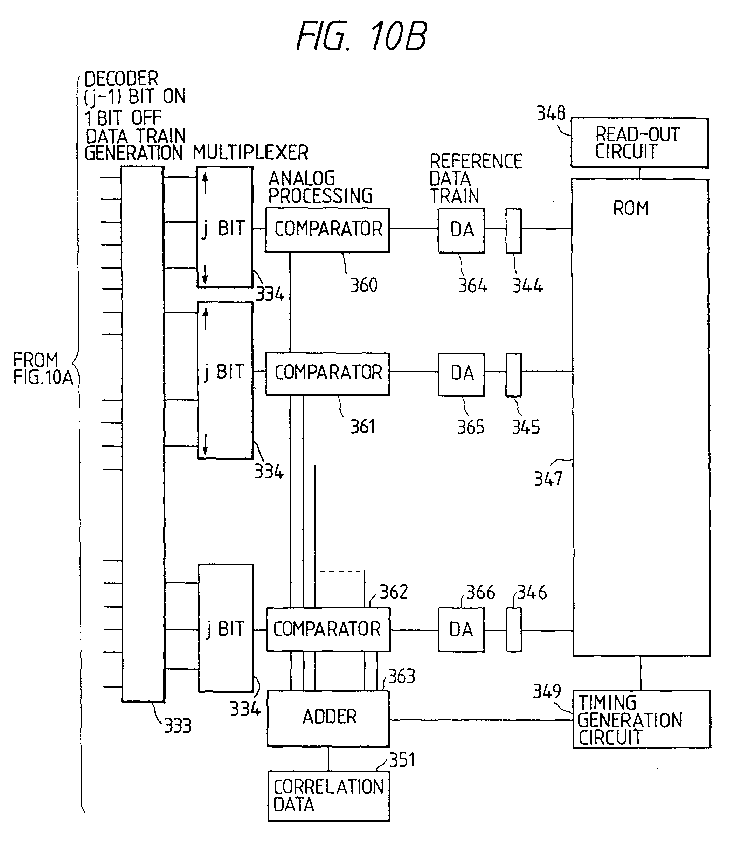

The second embodiment of the image processing unit of the invention will now be described with reference to Figs. 10A and 10B. In the diagram, the same portions as those in Figs. 9A and 9B are designated by the same reference numerals and their descriptions are omitted. The embodiment 2 differs from the above embodiment 1 with respect to a point that the comparing arithmetic operations are executed at analog information levels.

Therefore, the reference data trains 344, 345, and 346 from the ROM are converted into the analog information by D/A converters and are arithmetically operated together with the output data of the multiplexer by analog comparators 360, 361, and 362. The data of the largest correlation is generated by the correlation data circuit from the data added by an adder 363.

There is an advantage such that a circuit scale is small because the analog arithmetic operations are executed.

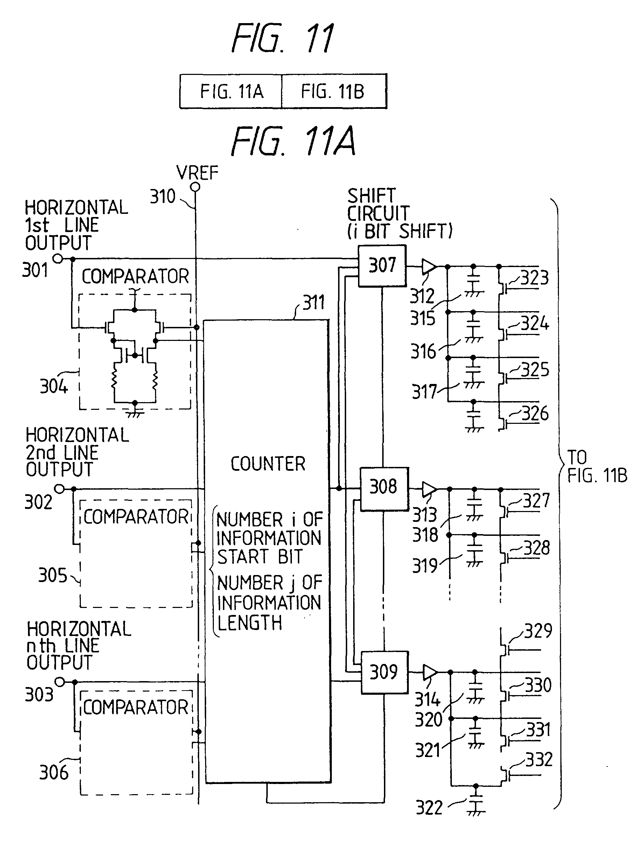

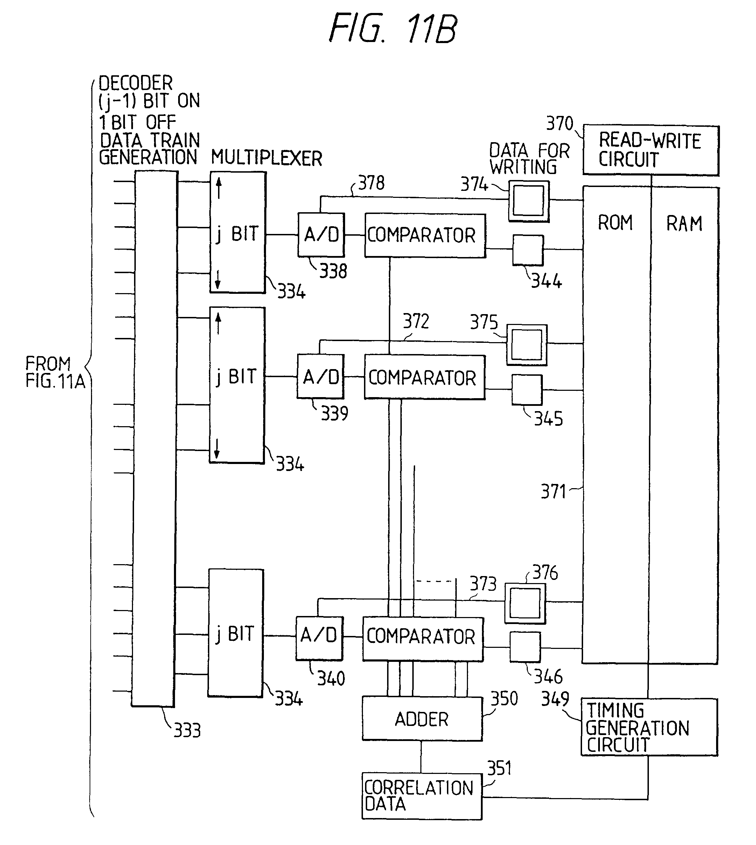

The third embodiment of the image processing unit of the invention will now be described with reference to Figs. 11A and 11B. In the third embodiment, in addition to the ROM, an RAM is also provided in a memory unit 371 and, after the data was processed by the correlation data circuit, in the case where the correlation data which reaches a reference level doesn't exist, the results of the A/D conversion of the image are written into data input terminals 374, 375, and 376 for writing through wirings 378, 372, and 373. Thus, the data is written into the RAM by a write/read-out circuit 370. With the above construction, a pattern recognizing apparatus having a learning function can be realized.

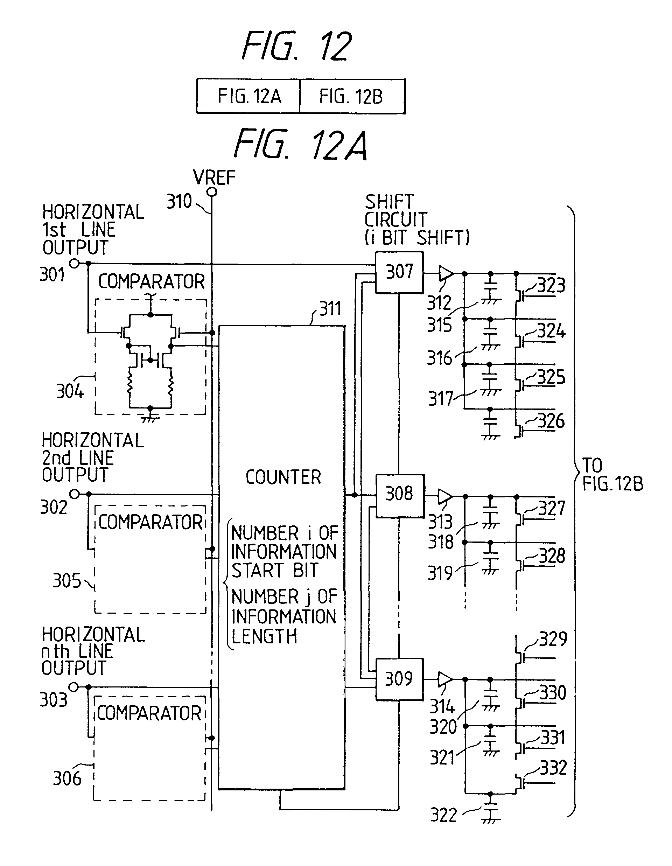

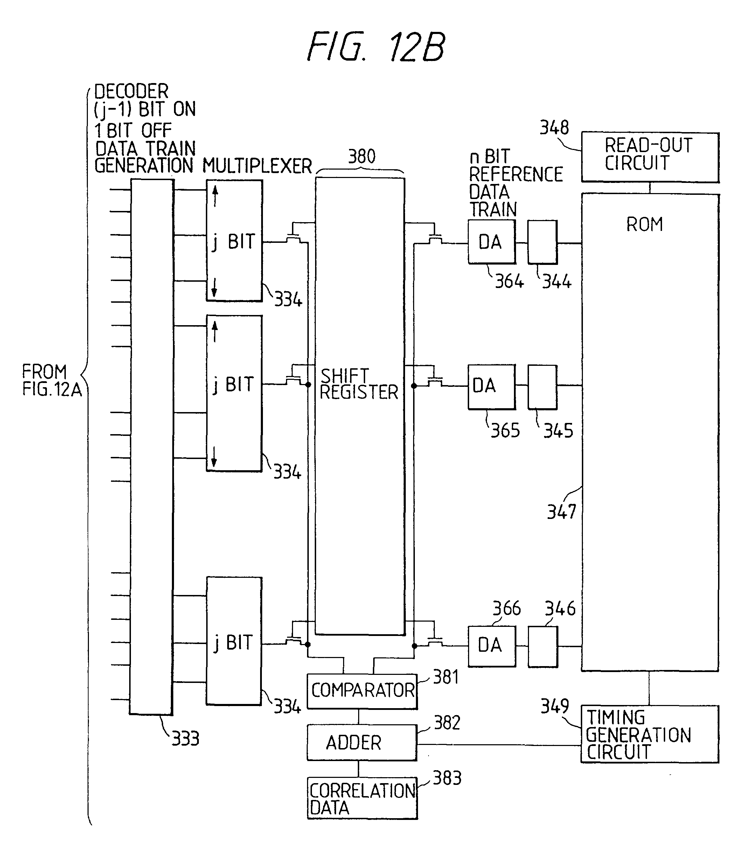

The fourth embodiment of the image processing unit of the invention will now be described with reference to Figs. 12A and 12B.

Reference numeral 380 denotes a scanning circuit represented by a shift register. A correlation between the analog output of the multiplexer 334 and the D/A converted analog data from the ROM is obtained for every bit by a comparator 381. An output of the comparator 381 is successively added by an adder 382 synchronously with the timing of the shift register 380. The addition result is sent to a correlation data circuit 383.

With the construction of the embodiment 4, the serial processes are executed and although the processing speed is less than in the embodiment 3, the circuit scale is small and such an embodiment is suitable for arithmetic operations of a large number of pixels.

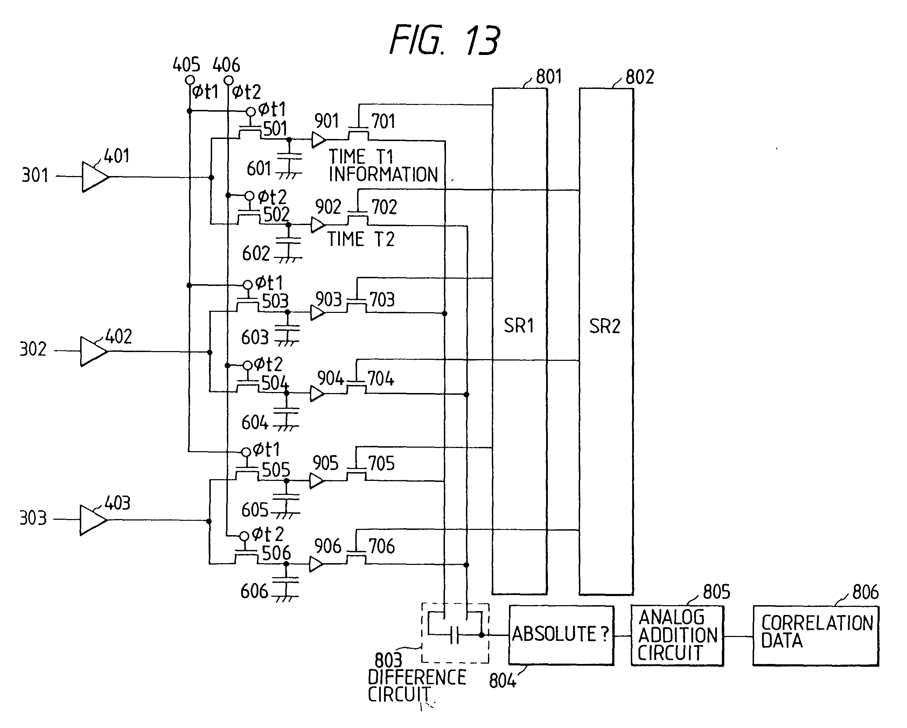

The fifth embodiment of the image processing unit of the invention will now be described with reference to Fig. 13. Although the embodiments 1 to 4 of the processing unit have the circuit construction for pattern recognition, the embodiment 5 relates to a processing circuit for detection of a movement.

The horizontal output data 301, 302, and 303 are transmitted through buffer amplifiers 401, 402, and 403. The data at time t1 is written into capacitors 601, 603, and 605 by setting a pulse $\phi_{t1}$ 405 to the high level and by turning on MOS switches 501, 503, and 505, respectively.

Subsequently, data at time t2 is input from 301, 302, and 303 and is again transmitted through the buffer amplifiers 401, 402, and 403 and is written into capacitors 602, 604, and 606 by setting a pulse $\phi_{t2}$ to the high level and by turning on MOS switches 502, 504, and 506, respectively.

To obtain the correlation data at times t1 and t2, the values written in the capacitors are amplified by buffer amplifiers 901 to 906 and are read out to a difference circuit 803. The absolute value of the difference result is obtained by an absolute value circuit 804. After that, each line difference data is added by an analog addition circuit 805 and the addition result is stored into correlation data 806.

Scan timings 801 and 802 are shifted by one bit by one in one direction or the other direction of the time base, and the similar reading operation is executed.

When a bit deviation amount of the largest correlation is obtained by the above operations, it is set into a movement amount of an object in the y direction. By also applying a similar process to the x direction, a movement amount in the x direction is derived.

A method whereby a movement amount of an object is calculated by the video image signal from the image sensor has already been executed. However, when the video image signal is used, a scan period of the video image has already been decided. For instance, in the NTSC system, one field is set in 1/60 second. Therefore, movement detection sensitivity deteriorates for fast movement in which there is substantial movement in one field period.

In the construction of the embodiment, since the outputs are simultaneously generated in the x and y directions, a movement detection of extremely high speed and high precision can be realized. The invention can be applied to an automobile, a train, a sensing system for preventing collision, a high speed tracking system, or the like.

In the embodiments, a plurality of signals are taken out from one photoelectric conversion device by using floating bus lines and the signals are read out in parallel in the row and column directions, so that high speed processes of the signals can be executed.

In addition, the present invention can be applied to devices other than photoelectric conversion device, for example, a memory, a pyroelectric sensor and a pressure sensor. In such application of the present invention, an output of each sensor can be used as an input signal source.

**Claims**

1. A two-dimensional array of signal generating elements (11, 21, 31, 41; 161, 162, 163, 164; 203), for generating output signals in accordance with the value of a stored or detected parameter,
**characterised in that**:

the array has a plurality of first bus lines (1, 2, 211, 212) extending in a first direction across the array and a plurality of second bus lines (3, 4, 213, 214) extending in a second direction across the array, the said bus lines being arranged to float;

each said element is coupled to provide its output signal, during read-out, in parallel (i) via a first respective capacitor (15, 25, 35, 45) to a respective first bus line (1, 2, 211, 212) and (ii) via a second respective capacitor (16, 26, 36, 46) to a respective second bus line (3, 4, 213, 214), while the respective first and second bus lines are in a floating state;

each said first bus line is coupled via respective said first capacitors to a plurality of elements distributed in the said first direction across the array and each said second bus line is coupled by respective said second capacitors to a plurality of elements distributed in the said second direction across the array;

for generating on each said bus line, in response to said read-out, a signal derived from the sum of a plurality of respective output signals coupled via said capacitors from a plurality of respective elements coupled to the bus line; and

the first bus lines are arranged to output in parallel with one another the said signals generated thereon, and the second bus lines are arranged to output in parallel with one another the said signals generated thereon.

2. An array according to claim 1 in which the signal generating elements are photoelectric conversion elements.

3. An array according to claim 1 in which the signal generating elements are memory cells.

4. An array according to claim 1 in which the signal generating elements are pyroelectric sensors.

5. An array according to claim 1 in which the signal generating elements are pressure sensors.

6. An array according to any one of the preceding claims in which each signal generating element is connected via a respective amplifier (201, 207) to its first and second capacitors.

7. An array according to claim 6 in which the gain of each respective amplifier is changeable in response to a control pulse.

8. An array according to any one of the preceding claims in which means (61, 62) is provided for grounding the bus lines to reset them.

9. An array according to any one of the preceding claims in which control means is arranged to change the potential of the bus lines in a first direction so as to read out the signals from the signal generating elements as potential changes in a second direction opposite to the first direction.

10. An array according to any one of the preceding claims in which the said capacitors do not all have the same value for all of the signal generating elements, whereby the signals generated on the bus lines are derived from the sums of the said pluralities of output signals weighted according to the relative values of the respective said capacitors.

11. An array according to any one of the preceding claims further comprising a plurality of A/D converters (338, 339, 340) for receiving signals from the bus lines and converting them.

12. An array according to claim 11 further comprising memory means (371) for storing the outputs of the A/D converters.

**Patentansprüche**

1. Eine zweidimensionale Reihe signalerzeugender Elemente (11, 21, 31, 41; 161, 162, 163, 164; 203) zum Erzeugen von Ausgabesignalen in Übereinstimmung mit dem Wert eines gespeicherten oder erfassten Parameters, **gekennzeichnet dadurch, dass**

die Reihe eine Vielzahl erster Busleitungen (1, 2, 211, 212) hat, die sich in einer ersten Richtung über die Reihe erstrecken und eine Vielzahl zweiter Busleitungen (3, 4, 213, 214) hat, die sich in einer zweiten Richtung über die Reihe erstrecken, wobei die Busleitungen so angeordnet sind, dass sie floaten;

jedes der Elemente gekoppelt ist, um bei der Abfrage sein Ausgabesignal parallel, (i) über einen jeweils ersten Kondensator (15, 25, 35, 45) zu einer jeweils ersten Busleitung (1, 2, 211, 212) und (ii) über einen jeweils zweiten Kondensator (16, 26, 36, 46) zu einer jeweils zweiten Busleitung (3, 4, 213, 214) zu liefern, während die jeweiligen ersten und zweiten Busleitungen in einem Floatzustand sind;

jede der ersten Busleitungen über die jeweiligen ersten Kondensatoren mit einer Vielzahl von Elementen gekoppelt ist, die in der ersten Richtung über die Reihe verteilt sind und jede der zweiten Busleitungen durch die jeweiligen zweiten Kondensatoren mit einer Vielzahl von Elementen gekoppelt ist, die in der zweiten Richtung über die Reihe verteilt sind;

in Reaktion auf die Abfrage auf jeder Busleitung ein Signal erzeugt wird, das hergeleitet ist aus der Summe einer Vielzahl jeweils ausgegebener, über die Kondensatoren gekoppelter Signale aus einer Vielzahl jeweiliger auf der Busleitung gekoppelter Elemente; und

die ersten Busleitungen so angeordnet sind, dass sie parallel zueinander die auf ihnen erzeugten Signale ausgeben und die zweiten Busleitungen so angeordnet sind, dass sie parallel zueinander die auf ihnen erzeugten Signale ausgeben.

2. Eine Reihe nach Anspruch 1, in der die signalerzeugenden Elemente fotoelektrische Wandlerelemente sind.

3. Eine Reihe nach Anspruch 1, in der die signalerzeugenden Elemente Speicherzellen sind.

4. Eine Reihe nach Anspruch 1, in der die signalerzeugenden Elemente pyroelektrische Sensoren sind.

5. Eine Reihe nach Anspruch 1, in der die signalerzeugenden Elemente Drucksensoren sind.

6. Eine Reihe nach jedem der vorstehenden Ansprüche, in der jedes signalerzeugende Element über einen jeweiligen Verstärker (201, 207) mit seinem ersten und zweiten Kondensator verbunden ist.

7. Eine Reihe nach Anspruch 6, in der die Verstärkung des jeweiligen Verstärkers in Reaktion auf einen Steuerimpuls verändert werden kann.

8. Eine Reihe nach jedem der vorstehenden Ansprüche, in der Einrichtungen (61, 62) zum Erden der Busleitungen zur Verfügung stehen, um diese zurückzusetzen.

9. Eine Reihe nach jedem der vorstehenden Ansprüche, in der Steuereinrichtungen angeordnet sind, um die Spannung der Busleitungen in einer ersten Richtung zum Lesen der Signale aus den signalerzeugenden Elementen zu ändern, wenn sich die Spannungl in eine zweite, der ersten Richtung entgegengesetze Richtung ändert.

10. Eine Reihe nach jedem der vorstehenden Ansprüche, in der die Kondensatoren nicht alle denselben Wert für alle signalerzeugenden Elemente haben, wodurch die auf den Busleitungen erzeugten Signale hergeleitet werden aus den Summen der Vielzahl der ausgegebenen Signale, gewichtet nach den relativen Werten der jeweiligen Kondensatoren.

11. Eine Reihe nach jedem der vorstehenden Ansprüche, darüber hinaus mit einer Vielzahl von A/D Wandlern (338, 339, 340) zum Empfang von Signalen aus den Busleitungen und zu ihrem Wandeln.

12. Eine Reihe nach Anspruch 11, darüber hinaus mit Speichereinrichtung (371) zum Speichern der Ausgaben der A/ D Wandler.

**Revendications**

1. Matrice bidimensionnelle d'éléments générant des signaux (11, 21, 31, 41 ; 161, 162, 163, 164 ; 203), servant à générer des signaux de sortie conformément à la valeur d'un paramètre enregistré ou détecté, **caractérisée en ce que** :

la matrice a une pluralité de premières lignes de bus (1, 2, 211, 212) s'étendant dans une première direction à travers la matrice et une pluralité de deuxièmes lignes de bus (3, 4, 213, 214) s'étendant dans une deuxième direction à travers la matrice, lesdites lignes de bus étant agencées pour flotter ;

chaque dit élément est couplé pour délivrer son signal de sortie, pendant la lecture, en parallèle (i) via un premier condensateur respectif (15, 25, 35, 45) à une première ligne de bus respective (1, 2, 211, 212) et (ii) via un deuxième condensateur respectif (16, 26, 36, 46) à une deuxième ligne de bus respective (3, 4, 213, 214), alors que les premières et deuxièmes lignes de bus respectives sont à un état flottant ;

chaque dite première ligne de bus est couplée via lesdits premiers condensateurs respectifs à une pluralité d'éléments répartis dans ladite première direction à travers la matrice et chaque dite deuxième ligne de bus est couplée par lesdits deuxièmes condensateurs respectifs à une pluralité d'éléments répartis dans ladite deuxième direction à travers la matrice ;

pour générer sur chaque dite ligne de bus, en réponse à ladite lecture, un signal dérivé de la somme d'une pluralité de signaux de sortie respectifs couplés via lesdits condensateurs d'une pluralité d'éléments respectifs couplés à la ligne de bus; et

les premières lignes de bus sont agencées pour délivrer en parallèle avec une autre lesdits signaux générés dessus, et les deuxièmes lignes de bus sont agencées pour délivrer en parallèle avec une autre lesdits signaux générés dessus.

2. Matrice selon la revendication 1, dans laquelle les éléments générant des signaux sont des éléments de conversion photoélectriques.

3. Matrice selon la revendication 1, dans laquelle les éléments générant des signaux sont des cellules de mémoire.

4. Matrice selon la revendication 1, dans laquelle les éléments générant des signaux sont des capteurs pyroélectriques.

5. Matrice selon la revendication 1, dans laquelle les éléments générant des signaux sont des capteurs de pression.

6. Matrice selon l'une quelconque des revendications précédentes, dans laquelle chaque élément générant des signaux est connecté à ses premiers et deuxièmes condensateurs via un amplificateur respectif (201, 207).

7. Matrice selon la revendication 6, dans laquelle le gain de chaque amplificateur respectif est modifiable en réponse à une impulsion de commande.

8. Matrice selon l'une quelconque des revendications précédentes, dans laquelle un moyen (61, 62) est prévu pour mettre à la terre les lignes de bus pour les remettre à zéro.

9. Matrice selon l'une quelconque des revendications précédentes, dans laquelle un moyen de commande est arrangé pour changer le potentiel des lignes de bus dans une première direction de façon à lire les signaux provenant des éléments générant des signaux lorsque le potentiel change dans une deuxième direction opposée à la première direction.

10. Matrice selon l'une quelconque des revendications précédentes, dans laquelle lesdits condensateurs n'ont pas tous la même valeur pour tous les éléments générant des signaux, ce par quoi les signaux générés sur les lignes de bus sont dérivés des sommes desdites pluralités de signaux de sortie pondérées selon les valeurs relatives desdits condensateurs respectifs.

11. Matrice selon l'une quelconque des revendications précédentes, comprenant en outre une pluralité de convertisseurs A/N (338, 339, 340) pour recevoir des signaux des lignes de bus et pour les convertir.

12. Matrice selon la revendication 11, comprenant en outre un moyen de mémoire (371) pour enregistrer les sorties des convertisseurs A/N.

FIG. 1

FIG. 2

DARK OUTPUT
BUS LINE
READ-OUT

CODE CONVERSION
DATA TRANSFER

OPTICAL SIGNAL
ACCUMULATION
PERIOD

COMPLETE  TRANSITIONAL
RESET      RESET

TRANSITIONAL
RESET

OPTICAL OUTPUT
BUS LINE READ-OUT+
TRANSFER

COMPLETE
RESET

φRE

φBR

φHF

φHFR

φHCR

φHCT

EP 0 626 785 B1

## FIG. 3A

154    155 Y

156

1

15

17

16

151

X ———————————————— X'

154

3

Y'

## FIG. 3B

154    3    155    151    154    4

X    p    p    p    X'

n⁻    152

n    153

## FIG. 3C

155    1    3    151

154    154

154    n⁺

Y    p    p    Y'

n⁺    p

n⁻    152

n    153

156    15    17    16

FIG. 4

SENSING UNIT

A CIRCUIT UNIT

HORIZONTAL LINE DRIVE

DARK CLAMP

PEAK DETECTION

SAMPLE HOLD INVERSION OUTPUT

HORIZONTAL 1st LINE OUTPUT

HORIZONTAL 2nd LINE OUTPUT

HORIZONTAL nth LINE OUTPUT

VERTICAL 1st COLUMN OUTPUT

VERTICAL 2nd COLUMN OUTPUT

VERTICAL nth COLUMN OUTPUT

EP 0 626 785 B1

FIG. 5

FIG. 6

SENSING UNIT

HORIZONTAL LINE DRIVE

DARK CLAMP

PEAK DETECTION

SAMPLE HOLD INVERSION OUTPUT

HORIZONTAL 1st LINE OUTPUT

HORIZONTAL 2nd LINE OUTPUT

HORIZONTAL nth LINE OUTPUT

A CIRCUIT UNIT

ØVF
ØVFR
ØVCR
VVPEAKOUT
ØVCT

VERTICAL 1st COLUMN OUTPUT

VERTICAL 2nd COLUMN OUTPUT

VERTICAL nth COLUMN OUTPUT

VRE

ØRE

ØHFR  ØHCR  ØHCT

EP 0 626 785 B1

FIG. 7

FIG. 8

# FIG. 9

| FIG. 9A | FIG. 9B |
|---------|---------|

## FIG. 9A

## FIG. 9B

# FIG. 10

| FIG. 10A | FIG. 10B |
|----------|----------|

## FIG. 10A

# FIG. 10B

FIG. 11

| FIG. 11A | FIG. 11B |

FIG. 11A

# FIG. 11B

# FIG. 12

| FIG. 12A | FIG. 12B |
|----------|----------|

## FIG. 12A

# FIG. 12B

FIG. 13